# EUROPEAN PATENT SPECIFICATION

(11) **EP 3 187 609 B1**
(45) Date of publication and mention of the grant of the patent: **06.10.2021**
(21) Application number: 15835384.7
(22) Date of filing: 20.08.2015
(51) Int. Cl.: C22C 38/50, C22C 38/46, C22C 38/00, C22C 38/04, C22C 38/02, C22C 38/06, C22C 38/42, C22C 38/34, C22C 38/44, C22C 38/48, C22C 38/52, C21D 9/00, C21D 9/46, C21D 6/00, C21D 8/02, B01J 32/00

(54) **FERRITIC STAINLESS STEEL FOIL AND PRODUCTION METHOD FOR SAME**
FERRITISCHE ROSTFREIE STAHLFOLIE UND HERSTELLUNGSVERFAHREN DAFÜR
FEUILLE D'ACIER INOXYDABLE FERRITIQUE ET SON PROCÉDÉ DE PRODUCTION

(30) Priority: 29.08.2014 JP 2014175033
(43) Date of publication of application: 05.07.2017
(73) Proprietor: JFE Steel Corporation, Tokyo 100-0011 (JP)
(72) Inventor: MIZUTANI, Akito, Tokyo 100-0011 (JP); FUJISAWA, Mitsuyuki, Tokyo 100-0011 (JP)
(74) Representative: Haseltine Lake Kempner LLP
(86) International application number: PCT/JP2015/004150
(87) International publication number: WO 2016/031192

(56) References cited:
- EP-A1- 2 036 994
- EP-A2- 1 308 532
- WO-A1-2013/080526
- WO-A1-2014/033372
- WO-A1-2014/080078
- JP-A- H08 144 021
- JP-A- H10 251 750
- JP-A- 2000 282 187
- JP-A- 2001 254 154
- JP-A- 2003 328 088
- JP-A- 2004 243 354
- JP-A- 2007 217 716
- JP-A- 2007 217 716
- JP-A- 2013 079 428
- KESTER D CLARKE ET AL: "Effect of Strain Rate on the Yield Stress of Ferritic Stainless Steels", METALLURGICAL AND MATERIALS TRANSACTIONS A, SPRINGER-VERLAG, NEW YORK, vol. 39, no. 4, 22 February 2008 (2008-02-22), pages 752-762, XP019696251, ISSN: 1543-1940

## Description

### Technical Field

The present invention relates to a ferritic stainless steel foil which is used for, in particular, a catalyst carrier for an exhaust gas purifying facility.

### Background Art

Nowadays, since automobile exhaust gas regulations are being tightened, there is an increased number of cases where a metal honeycomb made of stainless steel foil serving as a catalyst carrier for an automotive exhaust gas purifying facility is equipped in an automobile. A metal honeycomb is capable of realizing a larger aperture ratio and has higher thermal shock resistance and higher vibration resistance than a prevailing ceramic honeycomb carrier. Therefore, the proportion of cases where a metal honeycomb is employed is being increased. In particular, in the case where an exhaust gas purifying facility is equipped in a large automobile such as a truck, since the size of the carrier is large, a metal honeycomb, which has a high degree of freedom of a shape, is used in many cases.

Such a metal honeycomb has a honeycomb structure formed by stacking, for example, flat stainless steel foils (flat foils) and stainless steel foils formed into a corrugated shape (corrugated foils) in alternating layers and by fixing the contact points of the flat foils and the corrugated foils by using a brazing method or a diffusion joining method, and the metal honeycomb whose surface is coated with a catalytic material is used for an exhaust gas purifying facility.

A metal honeycomb is composed mainly of a high-Al-content ferritic stainless steel foil typified by, for example, a 20mass%Cr-5mass%Al-containing stainless steel foil or an 18mass%Cr-3mass%Al-containing stainless steel foil. By adding 2 mass% to 3 mass% or more of Al to stainless steel, since an oxide film of Al₂O₃ is formed on the surface of the stainless steel, there is a significant increase in oxidation resistance. In the case of a gasoline-powered automobile, the temperature inside its exhaust gas purifying facility is raised due to the temperature of exhaust gas and a catalytic reaction and may reach a high temperature of 1000°C or higher. Therefore, a high-Al-content ferritic stainless steel foil having an Al content of 3 mass% or more, which has very excellent oxidation resistance at a high temperature, is used for a catalyst carrier. In addition, a foil used for a catalyst carrier is required to have excellent shape change resistance at a high temperature in order to prevent flaking of the supported catalyst.

On the other hand, in the case of a diesel-powered automobile, the temperature of the exhaust gas is not raised to such a high temperature as is the case with the exhaust gas of a gasoline-powered automobile, and the maximum endpoint temperature is about 800°C in most cases. In the case of vehicles such as farm machines and construction machines other than automobiles, the highest temperature of their exhaust gases is even lower. Therefore, a foil is not required to have such excellent oxidation resistance at a high temperature or such excellent shape change resistance at a high temperature which the 20mass%Cr-5mass%Al-containing stainless steel foil or the 18mass%Cr-3mass%Al-containing stainless steel foil described above has. On the other hand, in the case of such high-Al-content ferritic stainless steel foils, although oxidation resistance is excellent, there is a problem in that, since a hot-rolled steel sheet in the middle of the manufacturing process is poor in terms of toughness, there is a decrease in manufacturability, which results in an increase in manufacturing costs. Also, these foils are poor in terms of workability. Therefore, fracturing tends to occur in the foils when corrugating work is performed, and there is a case where it is not possible to form the foils into a desired shape due to spring back. Consideration is also given to performing annealing before forming is performed in order to increase corrugating workability. However, in the case of a thin foil, since it is difficult to remove surface scale which is generated when annealing is performed by performing grinding or pickling, bright annealing is generally performed in a reducing atmosphere. Since bright annealing requires high-level atmosphere control, there is a significant increase in manufacturing costs due to the addition of a bright annealing process. In order to avoid such an increase in manufacturing costs, a foil is ideally used for corrugating work without being subjected to annealing.

In order to solve the problems described above, stainless steel foils whose manufacturability is increased by decreasing the Al content as much as possible have been proposed.

Patent Literature 1 discloses a metal honeycomb made of a stainless steel foil manufactured by limiting the Al content in the range of a level of impurities to 0.8 mass% and by forming a Cr oxide layer instead of an Al oxide layer at a high temperature in order to increase diffusion joining capability when a carrier is assembled. In addition, Patent Literature 2 discloses a metal honeycomb made of a stainless steel foil manufactured by limiting the Al content in the range of a level of impurities to 0.8 mass% and by setting the Mo content to be 0.3 mass% to 3 mass% in order to increase oxidation resistance, diffusion joining capability, and sulfuric acid corrosion resistance.

However, in the case of stainless steel foils described in Patent Literature 1 and Patent Literature 2, there is a problem in that, since a difference in thermal expansion coefficient between a Cr oxide layer generated on the surface of the foil and the base steel is larger than in the case of an Al oxide layer, creep deformation occurs at a high temperature, which results in a change in the shape of the foil and flaking of the oxide layer on the surface of the foil. In the case where such deformation or flaking occurs, since a catalyst supported on the surface of the foil falls off, it is not possible to satisfy the properties required for a catalyst carrier.

As described above, in the case where stainless steel having a decreased Al content is rolled into a foil having a thickness of 200 µm or less and used for a metal honeycomb, there is a large problem of a change in shape at a high temperature. Such ferritic stainless steel is poor in terms of shape change resistance when used at a high temperature.

Therefore, in the past, the present inventors invented a ferritic stainless steel foil manufactured by limiting the Al content to 0.01 mass% to 1.0 mass% in order to increase manufacturability and by adding chemical elements such as Cu, Nb, Mo, and W in order to increase shape change resistance at a high temperature (refer to Patent Literature 3).

Patent Literature 4 describes a ferritic stainless steel sheet containing about 0.01 percent by mass or less of carbon; about 1.0 percent by mass or less of silicon; about 1.5 percent by mass or less of manganese; about 11 to about 23 percent by mass of chromium; about 0.06 percent by mass or less of phosphorous; about 0.03 percent by mass or less of sulfur; about 1.0 percent by mass or less of aluminum; about 0.04 percent by mass or less of nitrogen; about 0.0005 to about 0.01 percent by mass of boron; about 0.3 percent by mass or less of vanadium; about 0.8 percent by mass or less of niobium and/or about 1.0 percent by mass or less of titanium.

Patent Literature 5 describes a Cr-containing steel, characterized by containing, by mass%, C: 0.01% or less, N: 0.015% or less, Si: 0.8 to 1.0%, Mn: 0.2 to 1.5%, P: 0.03% or less, S: 0.01% or less, Ni: 0.2% or less, Cu: 0.2% or less, Cr: 13 to 15%, Mo: 0.1% or less, Nb: 0.3 to 0.5%, Ti: 0.05 to 0.2%, V: 0.01 to 0.2%, Al: 0.015 to 1.0%, and B: 0.0002 to 0.0010%.

Patent Literature 6 describes a ferritic stainless steel sheet comprising: trace <= C <= 0.03%; 0.2% <=Mn <=1%; 0.2 % <= Si <= 1%; trace <= S <= 0.01%; trace <= P <= 0.04%; 15% <= Cr <= 22%; trace <= Ni <= 0.5%; trace <= Mo <= 2%; trace <= Cu <= 0.5%; 0.160% <=Ti <= 1%; 0.02% <= Al <= 1%; 0.2% <= Nb <= 1%; trace <= V <= 0.2%; 0.009% <= N <= 0.03%; trace <= Co <= 0.2%; trace <= Sn <= 0.05%; rare earths <= 0.1%; trace <= Zr <= 0.01%.

Patent Literature 7 describes a ferritic stainless steel comprising in weight percentages 0,003 - 0,035 % carbon, 0,05 - 1,0 % silicon, 0,1 - 0,8 % manganese, 20 - 24 % chromium, 0,05 - 0,8 % nickel, 0,003 -0,5 % molybdenum, 0,2 - 0,8 % copper, 0,003 - 0,05 % nitrogen, 0,05 - 0,8 % titanium, 0,05 - 0,8 % niobium, 0,03 - 0,5 % vanadium, less than 0,04 % aluminium, and the sum of C+N being less than 0,06 %.

Patent Literature 8 describes ferritic stainless steels including, by mass%, C: 0.001 to 0.030%, Si: more than 0.3 to 0.55%, Mn: 0.05 to 0.50%, P: not more than 0.05%, S: not more than 0.01%, Cr: 19.0 to 28.0%, Ni: 0.01 to less than 0.30%, Mo: 0.2 to 3.0%, Al: more than 0.08 to 1.2%, V: 0.02 to 0.50%, Cu: less than 0.1%, Nb: 0.005 to 0.50%, Ti: 0.05 to 0.50%, and N: 0.001 to 0.030%.

Patent Literature 9 describes a ferritic stainless cold rolled steel sheet comprising <=0.03% C, 0.11 to 2.00% Si, <=1.00% Mn, <=0.03% S, 10.00 to 25.00% Cr, <=0.03% N, <=0.08% Al, 0.10 to 0.50% Ti, 0.02 to 0.40% V, 0.0002 to 0.0050% B and <=0.012% O.

Patent Literature 10 describes a ferritic stainless steel comprising , by weight, 14-19% Cr, <=0.5% Si, <=0.5% Mn, <=0.1% Al, 0.02-0.40% Ti, 0-0.5% Nb, 0-1.0% Cu, 0-1.0% V, 0-1.0% Ni, 0-0.005% Ca.

Patent Literature 11 describes a welded stainless steel pipe comprising ≤0.03% C, ≤2.0% Si, ≤2.0% Mn, ≤0.1% P, ≤0.03% S, ≤1.0% Ni, 9 to 24% Cr, 0.05 to 0.60% Nb, 0.05 to 0.30% Ti, ≤0.15% Al, ≤0.03% N.

In NPL 1, the effect of strain rate on the yield stress of ferritic stainless steel sheet was experimentally determined and a previously developed model was applied to the data thus obtained.

### Citation List

### Patent Literature

PTL 1: Japanese Unexamined Patent Application Publication No. 7-213918
PTL 2: Japanese Unexamined Patent Application Publication No. 7-275715
PTL 3: Japanese Patent No. 5522330 (International Publication No. WO2013/114833)
PTL 4: European Patent Application Publication No. EP 1 308 532 A2
PTL 5: European Patent Application Publication No. EP 2 036 994 A1
PTL 6: International Patent Application Publication No. WO 2014/033372 A1
PTL 7: International Patent Application Publication No. WO 2014/080078 A1
PTL 8: International Patent Application Publication No. WO 2013/080526
PTL 9: Japanese Patent Application Publication No. JP 2001 254 154
PTL 10: Japanese Patent Application Publication No. JP H08 144 021
PTL 11: Japanese Patent Application Publication No. JP 2007 217 716 A

### Non-Patent Literature

NPL 1: Kester D. Clarke et al., "Effect of Strain Rate on the Yield Stress of Ferritic Stainless Steels", Metall Mater Trans A, Springer-Verlag New York

### Summary of Invention

### Technical Problem

However, in the case of the ferritic stainless steel foil according to Patent Literature 3, solute-strengthening chemical elements typified by, for example, expensive Cu, Nb, Mo, and W are added in order to increase shape change resistance at a high temperature. Therefore, there has been a demand for increasing manufacturability by decreasing component costs and for increasing corrugating workability without performing annealing by inhibiting a decrease in workability.

Therefore, an object of the present invention is, by solving the problems described above, to provide a ferritic stainless steel foil excellent in terms of corrugating workability, shape change resistance at a high temperature, and manufacturability and a method for manufacturing the steel foil.

### Solution to Problem

The present inventors diligently conducted investigations in order to solve the problems described above, and, as a result, found a method for increasing shape change resistance by adding specified amounts of Cr, Ti, and V instead of adding expensive strengthening chemical elements, and found that, with this method, it is possible to obtain a stainless steel foil excellent in terms of corrugating workability. The subjective matter of the present invention is defined in the claims.

### Advantageous Effects of Invention

According to the present invention, it is possible to provide a ferritic stainless steel foil excellent in terms of corrugating workability, shape change resistance at a high temperature, and manufacturability and a method for manufacturing the steel foil.

### Description of Embodiments

First, in order to complete the ferritic stainless steel foil to be used for a catalyst carrier for an exhaust gas purifying facility for a diesel-powered automobile according to the present invention, the present inventors conducted investigations regarding properties required to prevent flaking of a catalyst due to shape change in the case of a catalyst carrier for an exhaust gas purifying facility to be used for an exhaust gas whose highest temperature is 800°C or lower, and, as a result, found that it is possible to inhibit flaking of a catalyst from occurring in the case where a shape change ratio is 10% or less, or preferably 5% or less, after the catalyst carrier has been held at a temperature of 500°C or higher and 800°C or lower for 100 hours in atmospheric air. Here, a method for determining shape change ratio will be described in detail in the EXAMPLES.

In order to obtain an inexpensive stainless steel foil having sufficient corrugating workability and manufacturability while satisfying the required properties described above, by using a ferritic stainless steel foil in which the contents of Al, which decreases workability and manufacturability, and expensive chemical elements such as Cu, Nb, and Mo are controlled to be as small as possible, the present inventors conducted close investigations regarding shape change resistance at a high temperature and corrugating workability, and, as a result, obtained the following knowledge, which resulted in the completion of the present invention.

It was clarified that, in order to increase the shape change resistance of a ferritic stainless steel foil, the final rolling reduction of a cold rolling process performed on steel containing specified amounts of, for example, Cr, Ti, and V should be 50% or more and 95% or less, and Vickers hardness (HV) should be controlled to be higher than 200. This is thought to be because, since a large amount of work strain accumulates due to an increased rolling reduction of a cold rolling process, recrystallization is promoted by a heat treatment in a metal honeycomb manufacturing process, which results in an increase in the crystal grain diameter of a foil.

That is, it is thought that, since the amount of high-temperature creep deformation and an oxidation rate decrease with an increase in crystal grain diameter, there is a decrease in the amount of deformation when the metal honeycomb is used at a high temperature. On the other hand, in the case where Vickers hardness (HV) is 200 or lower, the effect of promoting an increase in crystal grain diameter is insufficient. Therefore, the Vickers hardness (HV) of the ferritic stainless steel foil according to the present invention is set to be higher than 200, or preferably higher than 220.

It is preferable that the crystal grain diameter of a ferritic stainless steel foil be increased after the steel foil has been assembled into a metal honeycomb structure. This is because there is an increase in cost in the case where an annealing process is added in a foil manufacturing process in order to increase a crystal grain diameter. Since a heating treatment (joining heat treatment) is usually performed in a vacuum of 1.0 × 10 Pa or less or in a reducing atmosphere at a temperature of 800°C to 1200°C for 30 seconds or more for performing brazing or diffusion joining when a catalyst carrier for a metal honeycomb is assembled, the crystal grain diameter should be increased by performing such a heat treatment. That is, by performing corrugating work with crystal grains being non-recrystallized, the crystal grain diameter should be increased due to recrystallization occurring when a joining heat treatment is performed. Here, the term "a reducing atmosphere" refers to an atmosphere composed of N₂, H₂, or Ar, or a mixture of these gases.

On the other hand, in the case where an excessive amount of work strain is accumulated, since it is difficult to perform corrugating work, there is a case where fracturing occurs when forming is performed. Even if fracturing does not occur, there is a case where it is not possible to perform corrugating work to a degree at which a desired shape is achieved due to an increase in the deformation resistance of the foil. From the results of the investigations, it was clarified that, unless Vickers hardness (HV) is 350 or higher, it is possible to perform forming without any problem under severe conditions such that the maximum bending radius is 1 mm or less when corrugating work is performed. Therefore, the Vickers hardness (HV) of the ferritic stainless steel foil according to the present invention is set to be lower than 350, preferably lower than 320, or more preferably lower than 300.

Here, a method for measuring the Vickers hardness (HV) of the ferritic stainless steel foil according to the present invention will be described.

First, after having cut a sample having an appropriate size from a foil and embedding the sample in, for example, a resin so that a cross section parallel to the rolling direction and at a right angle to the foil surface is exposed, mirror polishing is performed. Subsequently, by determining hardness at 5 points in the central portion in the thickness direction of this cross section by using a Vickers hardness meter, the average hardness of the 5 points is defined as the Vickers hardness (HV) of the foil. The details of, for example, the determining conditions are determined in accordance with JIS Z 2244.

### [Ferritic stainless steel foil]

Hereafter, the ferritic stainless steel foil according to the present invention will be described in detail.

First, the chemical composition of the ferritic stainless steel foil according to the present invention will be described. Hereinafter, % used when describing the constituent chemical elements of the ferritic stainless steel foil according to the present invention shall always denote mass%.

### <C: 0.020% or less>

Since there is a decrease in toughness due to large amounts of carbides precipitated when hot rolling is performed in the case where there is an increase in the C content, and since the corrugating workability of a foil decreases with an increase in the C content, the C content is set to be 0.020% or less, or preferably 0.010% or less. It is more preferable that the C content be as small as possible.

### <Si: 0.05% or more and 2.0% or less>

Although Si is a chemical element which increases oxidation resistance, in the case where the Si content is more than 2.0%, there is a decrease in toughness, and there is a decrease in workability, which results in difficulty in manufacturing. Therefore, the Si content is set to be 2.0% or less, preferably 1.0% or less, or more preferably 0.2% or less. However, where oxidation resistance is increased to a higher degree, the Si content is 0.05% or more, preferably 0.1% or more.

### <Mn: 0.05% or more and 1.0% or less>

In the case where the Mn content is more than 1.0%, there is a decrease in oxidation resistance at a high temperature. Therefore, the Mn content is set to be 1.0% or less, preferably 0.5% or less, or more preferably 0.3% or less. However, since Mn is effective for fixing S in steel, the Mn content is 0.05% or more, preferably 0.1% or more.

### <S: 0.010% or less>

In the case where the S content is more than 0.010%, there is a decrease in oxidation resistance at a high temperature. Therefore, the S content is set to be 0.010% or less, preferably 0.005% or less, or more preferably 0.003% or less. It is even more preferable that the S content be as small as possible.

### <P: 0.050% or less>

In the case where the P content is more than 0.050%, there is a decrease in oxidation resistance at a high temperature. Therefore, the P content is set to be 0.050% or less, or preferably 0.030% or less. It is more preferable that the P content be as small as possible.

<Cr: 10.0% or more and 25.0% or less>

Since Cr is a chemical element which is essential for achieving satisfactory oxidation resistance and strength at a high temperature, the Cr content is set to be 10.0% or more. However, in the case where the Cr content is more than 25.0%, since there is a decrease in workability, it is not possible to achieve excellent corrugating workability, which is one of the targets of the present invention. Therefore, the Cr content is set to be 10.0% or more and 25.0% or less, or preferably 10.0% or more and 20.0% or less. In consideration of a balance between manufacturing costs and oxidation resistance, it is more preferable that the Cr content be 16.0% or more and 17.0% or less.

### <Ni: 0.05% or more and 0.50% or less>

Ni is effective for increasing brazability when a catalyst carrier is assembled. Such an effect is realized in the case where the Ni content is 0.05% or more. However, in the case where the content of Ni, which is an austenite-stabilizing chemical element, is more than 0.50%, there is an increase in the thermal expansion coefficient of the foil due to the formation of austenite when the oxidation of Cr starts, which results in a problem of, for example, wrinkling or fracturing of a foil. Therefore, the Ni content is set to be 0.05% or more and 0.50% or less, preferably 0.08% or more and 0.30% or less, or more preferably 0.10% or more and 0.20% or less.

### <Ti: 0.14% or more and 0.25% or less.>

Ti is a chemical element which increases workability and oxidation resistance by fixing C and N in steel, and such an effect is realized in the case where the Ti content is 0.14% or more. On the other hand, in the case where the Ti content is more than 0.25%, TiN having a large grain diameter is precipitated. Since the present invention is based on the assumption that the thickness of the foil is 200 µm or less, and since such TiN has a grain diameter of several µm to several tens of µm, such TiN causes perforation by penetrating the foil or a decrease in oxidation resistance by penetrating an oxide film. Therefore, the Ti content is set to be 0.14% or more and 0.25% or less, or preferably 0.15% or more and 0.19% or less.

### <Al: 0.001% or more and 0.10% or less>

Al has a deoxidation effect. Such an effect is realized in the case where the Al content is 0.001% or more. However, in the case where the Al content is more than 0.10%, there is a decrease in the toughness or pickling capability of a hot-rolled steel sheet. Therefore, the Al content is set to be 0.001% or more and 0.10% or less, or preferably 0.020% or more and 0.060% or less.

### <V: 0.02% or more and 0.10% or less>

V is effective for increasing the toughness of a hot-rolled steel sheet and the oxidation resistance of a foil by combining with C and N in steel. Also, V is effective for preventing perforation when foil rolling is performed by inhibiting the precipitation of TiN having a large grain diameter. In order to realize such effects, the V content is set to be 0.02% or more. On the other hand, in the case where the V content is more than 0.10%, there is a decrease in toughness and oxidation resistance on the contrary. Therefore, the V content is set to be 0.02% or more and 0.10% or less, or preferably 0.02% or more and 0.04% or less.

### <N: 0.020% or less>

In the case where the N content is more than 0.020%, there is a decrease in toughness, and there is difficulty in manufacturing due to a decrease in workability. Therefore, the N content is set to be 0.020% or less, or preferably 0.010% or less.

The base chemical composition of the ferritic stainless steel foil according to the present invention is as described above, and the remainder which is different from those above is Fe and inevitable impurities.

Moreover, the ferritic stainless steel foil according to the present invention may contain Mo, Cu, Co, Nb, REM, Zr, Hf, Ca, and Mg as selective chemical elements.

### <Mo: 0.01% or more and 0.50% or less>

Mo is effective for increasing the high-temperature strength of a ferritic stainless steel foil. Also, Mo increases salt corrosion resistance by stabilizing an oxide film formed on the surface of a ferritic stainless steel foil. Such effects are realized in the case where the Mo content is 0.01% or more. However, in the case where the Mo content is more than 0.50%, since there is a decrease in the toughness of ferritic stainless steel, there may be difficulty in manufacturing a foil. Therefore, in the case where Mo is added, the Mo content is 0.01% or more and 0.50% or less, or more preferably 0.10% or more and 0.30% or less.

### <Cu: 0.01% or more and 0.30% or less>

Cu is a chemical element which is effective for increasing the high-temperature strength of a ferritic stainless steel foil. In the case where Cu is added, since there is an increase in the strength of a foil due to the formation of precipitates having a small grain diameter, high-temperature creep deformation, which is caused by a difference in thermal expansion coefficient between an oxide film formed on the surface of the foil and the base steel, is inhibited. In addition, as a result of high-temperature creep deformation being inhibited, there is an increase in the shape stability of a ferritic stainless steel foil at a high-temperature, which results in an increase in the adhesiveness of an oxide film and the adhesiveness of a catalyst.

In order to realize such effects, it is preferable that the Cu content be 0.01% or more. However, in the case where the Cu content is more than 0.30%, there is a decrease in the oxidation resistance of a ferritic stainless steel foil, and there may be an increase in cost due to difficulty in working. Therefore, in the case Cu is added, the Cu content is 0.01% or more and 0.30% or less. In consideration of decreasing the cost, it is more preferable that the Cu content be 0.05% or more and 0.25% or less.

### <Co: 0.01% or more and 0.20% or less>

Co is effective for increasing manufacturability by increasing the toughness of a stainless steel foil. Such an effect is realized in the case where the Co content is 0.01% or more. On the other hand, in the case where the Co content is more than 0.20%, there may be a decrease in workability. Therefore, in the case where Co is added, the Co content is 0.01% or more and 0.20% or less.

### <Nb: 0.01% or more and 0.20% or less>

Nb is effective for increasing the high-temperature strength of a foil. Such an effect is realized in the case where the Nb content is 0.01% or more. However, in the case where the Nb content is more than 0.20%, since there is a rise in recrystallization temperature, an increase in crystal grain diameter is inhibited when a heat treatment for diffusion joining is performed, which may result in a decrease in diffusion joining capability. In addition, since Nb is mixed in an oxide film or forms a compound with Fe, there may be a decrease in shape change resistance at a high-temperature. Therefore, in the case Nb is added, the Nb content is 0.01% or more and 0.20% or less, or more preferably 0.02% or more and 0.05% or less.

### <REM: 0.01% or more and 0.20% or less>

The term "REM" here refers to Y and chemical elements respectively having atomic numbers of 57 through 71 such as La, Nd, and Sm, and the content of REM refers to the total contents of these chemical elements. Generally, since REM increases the adhesiveness of an oxide film, REM is significantly effective for increasing the spalling resistance of the film. Such an effect is realized in the case where the REM content is 0.01% or more. However, in the case where the REM content is more than 0.20%, these chemical elements are concentrated and precipitated at crystal grain boundaries and then melted when heated at a high temperature, which may result in the formation of the surface defects of a hot-rolled steel sheet. Therefore, in the case REM is added, the REM content is 0.01% or more and 0.20% or less, or more preferably 0.03% or more and 0.10% or less.

### <Zr: 0.01% or more and 0.20% or less>

As a result of Zr combining with C and N in steel, there is an increase in the toughness of a hot-rolled steel sheet, and there is an increase in workability, which facilitates the manufacturing of a foil. Also, as a result of being concentrated at grain boundaries in an oxide film, there is an increase in oxidation resistance at a high-temperature and in strength at a high-temperature, in particular, shape change resistance. Such effects are realized in the case where the Zr content is 0.01% or more. However, in the case where the Zr content is more than 0.20%, since Zr forms intermetallic compounds with, for example, Fe, there may be a decrease in oxidation resistance. Therefore, in the case where Zr is added, the Zr content is 0.01% or more and 0.20% or less, or more preferably 0.01% or more and 0.05% or less.

### <Hf: 0.01% or more and 0.20% or less>

Hf is effective for increasing oxidation resistance at a high temperature by increasing the adhesiveness between an oxide film formed on the surface of a foil and the base steel. In order to realize such an effect, it is preferable that the Hf content be 0.01% or more. On the other hand, in the case where the Hf content is more than 0.20%, there may be a decrease in the toughness of a hot-rolled steel sheet in a manufacturing process. Therefore, in the case Hf is added, the Hf content is 0.01% or more and 0.20% or less, or more preferably 0.02% or more and 0.10% or less.

### <Ca: 0.0003% or more and 0.0020% or less>

Ca is a chemical element which is effective for preventing nozzle clogging caused by Ti-based inclusions, which tend to be crystallized when continuous casting is performed. Such an effect is realized in the case where the Ca content is 0.0003% or more. However, in the case where the Ca content is more than 0.0020%, there may be a decrease in corrosion resistance due to the formation of CaS. Therefore, in the case where Ca is added, the Ca content is 0.00030 or more and 0.0020% or less, more preferably 0.0005% or more and 0.0015% or less, or even more preferably 0.0005% or more and 0.0010% or less.

### <Mg: 0.0005% or more and 0.0030% or less>

Mg has a function of increasing the adhesiveness between an oxide film formed on the surface of a ferritic stainless steel foil and the base steel. In order to realize such an effect, it is preferable that the Mg content be 0.0005% or more. On the other hand, in the case where the Mg content is more than 0.0030%, there may be a decrease in the toughness of ferritic stainless steel and the oxidation resistance of a ferritic stainless steel foil. Therefore, in the case Mg is added, the Mg content is 0.0005% or more and 0.0030% or less.

### <Vickers hardness: more than 200 and less than 350>

As described above, the Vickers hardness of the ferritic stainless steel foil according to the present invention is set to be more than 200 and less than 350. In the case where the Vickers hardness of a ferritic stainless steel foil is 200 or less, it is not possible to sufficiently realize the effect of promoting an increase in the crystal grain diameter of the ferritic stainless steel foil. In addition, in the case where the Vickers hardness of a ferritic stainless steel foil is 350 or more, there is a case where it is not possible to perform corrugating work to a degree of achieving a desired shape due to an increase in the deformation resistance of a foil. Therefore, the Vickers hardness of the ferritic stainless steel foil according to the present invention is set to be more than 200 and less than 350. It is preferable that this Vickers hardness be more than 220. In addition, it is preferable that this Vickers hardness be less than 320, or more preferably less than 300. In order to control the Vickers hardness of the ferritic stainless steel foil according to the present invention to be more than 200 and less than 350, the ferritic stainless steel according to the present invention should be controlled to have the specified chemical composition as described above, and the final rolling reduction of a cold rolling process should be controlled to be 50% or more and 95% or less as described below.

Here, it is preferable that this Vickers hardness be determined in the central portion in the thickness direction in the cross section of the foil. More specifically, it is preferable that, by embedding the sample in, for example, a resin so that a cross section parallel to the rolling direction (cross section at a right angle to the foil surface) is exposed, by performing mirror polishing on the sample, and by subsequently determining hardness at 5 points in the central portion in the thickness direction of this cross section by using a Vickers hardness meter, the average hardness of the 5 points be defined as the Vickers hardness of the foil. At this time, for example, the details of the determining conditions may be determined in accordance with JIS Z 2244.

The ferritic stainless steel foil according to the present invention described above can preferably be used for a catalyst carrier for an exhaust gas purifying facility used for an exhaust gas whose highest temperature is 800°C or lower.

### [Method for manufacturing a ferritic stainless steel foil]

In order to manufacture the ferritic stainless steel foil described above, ordinary stainless steel manufacturing equipment may be used. By preparing molten steel having the chemical composition described above by using, for example, a converter or an electric furnace, by performing secondary refining on the molten steel by using a VOD method or an AOD method as needed, and by using an ingot casting-slabbing method or a continuous casting method, a steel slab is obtained. After having charged the cast slab into a heating furnace in order to heat the slab to a temperature of 1150°C to 1250°C, the heated slab is subjected to a hot rolling process. By removing the surface scale of the hot-rolled steel strip obtained as described above by performing shot blasting, pickling, and/or mechanical polishing on the steel strip, and by performing cold rolling plural times with annealing (process annealing) which is performed between those cold rolling, a stainless steel foil having a foil thickness of 200 µm or less is obtained. The final rolling reduction of the cold rolling process is set to be 50% or more and 95% or less, or preferably 60% or more and 90% or less. In the case where the final rolling reduction is less than 50%, there is a case where the Vickers hardness is lower than the range in the present invention(more than Hv200 and less than Hv350), which may result in poor shape change resistance. Therefore, the final rolling reduction is set to be 50% or more. On the other hand, in the case where the final rolling reduction is more than 95%, the effect of promoting recrystallization by accumulating work strain becomes saturated, and there is an increase in the number of rolling operations. Therefore, the final rolling reduction is set to be 95% or less. Here, the term "final rolling reduction" refers to the amount of decrease in thickness at the final time cold rolling is performed divided by the thickness before the final time cold rolling is performed. In addition, cold rolling is performed plural times, and the number of times cold rolling is performed should be at least 2 in total, including one after hot rolling has been performed and one after process annealing has been performed. The process annealing is performed under conditions of an annealing temperature of 800°C to 1100°C and a holding time of 5 seconds to 10 minutes. Furthermore, the obtained foil is used for corrugating work without being subjected to annealing

It is preferable that the thickness of the foil be 200 µm or less. In addition, in the case where satisfactory vibration resistance and durability are particularly required for a catalyst carrier for an exhaust gas purifying facility, it is more preferable that the thickness of the foil be 100 µm to 200 µm. In particular, in the case where a high cell density and a low back pressure are required, it is more preferable that the thickness of the foil be 25 µm to 100 µm. In consideration of the balance between manufacturing costs and properties, it is more preferable that the thickness of the foil be 40 µm to 150 µm.

As described above, it is possible to obtain the ferritic stainless steel foil according to the present invention, which is excellent in terms of oxidation resistance, corrugating workability, shape change resistance at a high temperature, and manufacturability.

### EXAMPLE 1

Hereafter, the present invention will be described on the basis of examples. By preparing molten steels having the chemical compositions given in Table 1 by using a vacuum melting method, by heating the steel material to a temperature of 1200°C, and by performing hot rolling in a temperature range of 900°C to 1200°C, hot-rolled steel sheets having a thickness of 3 mm were obtained. Subsequently, by performing annealing including holding these hot-rolled steel sheets in atmospheric air at a temperature of 950°C to 1050°C for one minute, by performing pickling, and by performing cold rolling, cold-rolled steel sheets having a thickness of 1.0 mm were obtained. Subsequently, after having performed annealing including holding the cold-rolled steel sheets in atmospheric air at a temperature of 950°C to 1050°C for one minute, surface scale was removed by performing pickling. Subsequently, after having performed cold rolling to a thickness of 0.2 mm, process annealing was performed by holding the cold-rolled steel sheets in an N₂ atmosphere at a temperature of 950°C to 1050°C for one minute. By further performing cold rolling on the cold-rolled steel sheets which had been subjected to process annealing, foils having a width of 100 mm and a foil thickness of 50 µm were obtained. In this case, since the thickness after process annealing had been performed was 0.2 mm, and since the final foil thickness was 50 µm, the final rolling reduction was 75%. The corrugating workability of the foils obtained as described above was evaluated by using the method described below. Cross-sectional hardness after rolling had been performed was determined by using the method described above. In the case of steel No. 22 where V was not added, since perforation occurred when rolling was performed to a foil thickness of 50 µm, the sample was not subjected to the evaluations following this rolling process.

**[Table 1]**

| Steel No. | Chemical Composition (mass%) | | | | | | | | | | | | Note |
|---|---|---|---|---|---|---|---|---|---|---|---|---|---|
| | C | Si | Mn | S | P | Cr | Ni | Ti | Al | V | N | Other | |
| 1 | 0.011 | 1.61 | 0.13 | 0.002 | 0.023 | 11.1 | 0.12 | 0.24 | 0.022 | 0.038 | 0.014 | - | Example |
| 2 | 0.008 | 0.60 | 0.13 | 0.003 | 0.022 | 10.9 | 0.13 | 0.21 | 0.025 | 0.025 | 0.011 | - | Example |
| 3 | 0.008 | 1.51 | 0.07 | 0.001 | 0.023 | 11.0 | 0.12 | 0.17 | 0.021 | 0.056 | 0.010 | - | Example |
| 4 | 0.007 | 0.21 | 0.12 | 0.003 | 0.032 | 11.3 | 0.18 | 0.22 | 0.045 | 0.026 | 0.012 | REM:0.06 | Example |
| 5 | 0.010 | 1.40 | 0.12 | 0.002 | 0.031 | 13.2 | 0.15 | 0.20 | 0.036 | 0.022 | 0.010 | - | Example |
| 6 | 0.013 | 0.28 | 0.15 | 0.002 | 0.034 | 13.0 | 0.13 | 0.24 | 0.026 | 0.031 | 0.008 | - | Example |
| 7 | 0.009 | 1.53 | 0.10 | 0.001 | 0.038 | 12.8 | 0.17 | 0.17 | 0.021 | 0.031 | 0.014 | - | Example |
| 8 | 0.006 | 0.21 | 0.11 | 0.002 | 0.029 | 13.2 | 0.10 | 0.20 | 0.024 | 0.023 | 0.009 | REM:0.05 | Example |
| | | | | | | | | | | | | Zr:0.05 | |
| 9 | 0.005 | 1.70 | 0.08 | 0.002 | 0.038 | 16.0 | 0.16 | 0.24 | 0.025 | 0.025 | 0.007 | - | Example |
| 10 | 0.004 | 0.25 | 0.11 | 0.001 | 0.031 | 16.1 | 0.13 | 0.18 | 0.023 | 0.022 | 0.008 | - | Example |
| 11 | 0.005 | 0.14 | 0.12 | 0.001 | 0.030 | 15.8 | 0.12 | 0.23 | 0.030 | 0.024 | 0.011 | - | Example |
| 12 | 0.003 | 0.19 | 0.11 | 0.001 | 0.037 | 16.0 | 0.19 | 0.22 | 0.039 | 0.026 | 0.009 | REM:0.05 | Example |
| | | | | | | | | | | | | Hf:0.04 | |
| 13 | 0.013 | 0.12 | 0.13 | 0.001 | 0.039 | 21.5 | 0.20 | 0.14 | 0.027 | 0.028 | 0.008 | Cu:0.27 | Example |
| 14 | 0.011 | 0.11 | 0.10 | 0.002 | 0.030 | 24.0 | 0.18 | 0.18 | 0.024 | 0.091 | 0.013 | Cu:0.21 | Example |
| 15 | 0.007 | 0.10 | 0.22 | 0.002 | 0.025 | 19.1 | 0.12 | 0.22 | 0.033 | 0.032 | 0.007 | Cu:0.08 | Example |
| 16 | 0.005 | 1.48 | 0.15 | 0.002 | 0.028 | 16.1 | 0.17 | 0.16 | 0.088 | 0.025 | 0.007 | Nb:0.06 | Example |
| 17 | 0.011 | 1.31 | 0.15 | 0.002 | 0.028 | 16.2 | 0.14 | 0.18 | 0.036 | 0.029 | 0.011 | Mo:0.26 | Example |
| 18 | 0.004 | 1.42 | 0.21 | 0.001 | 0.030 | 16.0 | 0.11 | 0.18 | 0.025 | 0.027 | 0.009 | Co:0.12 | Example |
| 19 | 0.010 | 0.09 | 0.17 | 0.002 | 0.033 | 16.2 | 0.20 | 0.17 | 0.029 | 0.024 | 0.012 | Ca:0.0016 | Example |
| | | | | | | | | | | | | Mg:0.0011 | |
| 20 | 0.008 | 0.11 | 0.12 | 0.002 | 0.025 | 25.3 | 0.13 | 0.18 | 0.036 | 0.028 | 0.013 | - | Comparative Example |
| 21 | 0.010 | 0.15 | 0.13 | 0.002 | 0.035 | 15.9 | 0.15 | 0.12 | 0.029 | 0.032 | 0.007 | - | Comparative Example |
| 22 | 0.010 | 0.15 | 0.13 | 0.002 | 0.035 | 15.9 | 0.15 | 0.17 | 0.031 | - - | 0.007 | - | Comparative Example |

### (1) Cross-sectional hardness

The cross-sectional hardness of the foil was evaluated by determining Vickers hardness after rolling had been performed. After having cut the foil into a sample having a size of 10 mm (in the rolling direction) × 15 mm and embedding the sample in a resin so that a cross section parallel to the rolling direction (at a right angle to the thickness direction of the foil) was exposed, mirror polishing was performed. Subsequently, by determining hardness at 5 points in the central portion in the thickness direction of the cross section by using a Vickers hardness meter with a determining load of 500 g in accordance with JIS Z 2244, the average hardness of the 5 points was derived.

### (2) Corrugating workability

The corrugating workability of the foil was evaluated on the basis of the amount of spring back when corrugating work was performed on the foil. Corrugating work was performed by passing the foil through the gap between two gear-shaped rolls having a maximum bending radius of 0.5 mm and a wave pitch of 2.0 mm. Although the corrugated foil shall have the same shape as that of the rolls provided that bending work is ideally performed without spring back, practically, the portion which has been subjected bending work is unbended due to spring back. Therefore, a case where the value of [(length after work/length before work) × 100] (%), which is the ratio of the length after work has been performed to the length before work is performed, is small was judged as a case of excellent corrugating workability where the effect of spring back was small. By performing corrugating work on a foil having a width of 100 mm, a length of 300 mm, and a thickness of 50 µm, and by calculating the value of [(length after work/length before work) × 100] (%), a case where the value was 70% or less was judged as ⊙, a case where the value was more than 70% and 80% or less was judged as ○, and a case where the value was more than 80% was judged as ×. The case of ⊙ or ○ was judged as a case where the object of the present invention was achieved.

### (3) Shape change resistance at a high temperature

A method for evaluating shape change resistance at a high temperature will be described. Since a metal honeycomb is usually used after a joining heat treatment such as brazing or diffusion joining has been performed, shape change resistance was investigated by using a test piece which had been subjected to a heat treatment simulating such a heat treatment.

First, three test pieces were prepared for each of various kinds of steel, where a test piece was prepared by bending a foil having a width of 100 mm, a length of 50 mm, and a thickness of 50 µm into a circular cylinder shape and by fixing the edges of the foil to each other by performing spot welding. Subsequently, a heat treatment corresponding to a heat treatment performed in diffusion joining or brazing was performed at a temperature of 1100°C for 30 minutes in a vacuum of 1.0 × 10⁻¹ Pa or less. After having heated the test pieces, which had been prepared as described above, at a temperature of 700°C for 100 hours in a furnace in an atmospheric air, the average size change ratio, that is, the average value of [(cylinder length after heating/cylinder length before heating) × 100] (%) of the three test pieces was determined. A case where the average size change ratio was more than 10% was judged as ×, a case where the average size change ratio was more than 5% and 10% or less was judged as O, and a case where the average size change ratio was 5% or less was judged as ⊙. The case of ⊙ or ○ was judged as a case where the object of the present invention was achieved.

The results are given in Table 2.

**[Table 2]**

| Test Piece | Steel No. | Cross-sectional Hardness | Corrugating Workability of Foil | | Shape Change Resistance | | Note |
|---|---|---|---|---|---|---|---|
| | | Vickers Hardness after Rolling | (Length after Work/Length before Work) × 100 (%) | Evaluation | Size Change Ratio (%) | Evaluation | |
| A | 1 | 265 | 64.0 | ⊙ | 4.8 | ⊙ | Example |
| B | 2 | 263 | 66.8 | ⊙ | 5.9 | ○ | Example |
| C | 3 | 266 | 62.9 | ⊙ | 6.4 | ○ | Example |
| D | 4 | 265 | 61.1 | ⊙ | 4.5 | ⊙ | Example |
| E | 5 | 283 | 67.4 | ⊙ | 3.9 | ⊙ | Example |
| F | 6 | 277 | 67.1 | ⊙ | 4.9 | ⊙ | Example |
| G | 7 | 285 | 65.3 | ⊙ | 4.1 | ⊙ | Example |
| H | 8 | 282 | 67.7 | ⊙ | 3.2 | ⊙ | Example |
| I | 9 | 287 | 63.5 | ⊙ | 4.8 | ⊙ | Example |
| J | 10 | 294 | 72.6 | ○ | 4.1 | ⊙ | Example |
| K | 11 | 291 | 72.4 | ○ | 4.3 | ⊙ | Example |
| L | 12 | 289 | 69.7 | ⊙ | 5.1 | ○ | Example |
| M | 13 | 296 | 72.6 | ○ | 5.3 | ○ | Example |
| N | 14 | 299 | 76.0 | ○ | 4.5 | ⊙ | Example |
| O | 15 | 305 | 74.0 | ○ | 3.5 | ⊙ | Example |
| P | 16 | 293 | 76.0 | ○ | 3.1 | ⊙ | Example |
| Q | 17 | 290 | 71.0 | ○ | 2.9 | ⊙ | Example |
| R | 18 | 285 | 75.0 | ○ | 2.4 | ⊙ | Example |
| S | 19 | 295 | 72.0 | ○ | 2.1 | ⊙ | Example |
| T | 20 | 367 | 85.0 | × | 6.4 | ○ | Comparative Example |
| U | 21 | 275 | 68.8 | ⊙ | 13.4 | × | Comparative Example |
| V | 22 | No test was performed due to the perforation of the foil. | | | | | Comparative Example |

In the case of the foils of the examples of the present invention, spring back after corrugating work had been performed was small, which means that these foils were excellent in terms of corrugating workability. Moreover, the Vickers hardness after rolling had been performed was 200 or more, which means that these foils were excellent in terms of shape change resistance.

On the other hand, in the case of test piece T, which was a comparative example having Cr content more than the range according to the present invention, the hardness after rolling had been performed was higher than the range according to the present invention, which resulted in poor corrugating workability. In the case of test piece U, which was a comparative example having Ti content less than the range according to the present invention, Fe oxides were formed due to a decrease in oxidation resistance, which resulted in a decrease in shape change resistance. In the case of test piece V, which was a comparative example having no V content, since perforation occurred when foil rolling was performed due to the precipitation of TiN having a large grain diameter, the subsequent tests were not performed.

From the results described above, it is clarified that the foils of the present invention were excellent in terms of corrugating workability and shape change resistance at a high temperature.

### EXAMPLE 2

In order to investigate the hardness after rolling had been performed and its influences on corrugating workability and shape change resistance, foils were manufactured from some of the steels (steel Nos. 1, 5, and 10) given in Table 1 with various final rolling reductions. The manufacturing conditions other than the thicknesses when process annealing was performed and the final foil thicknesses and the methods for evaluating corrugating workability and shape change resistance were the same as those used in the EXAMPLE 1. The cold rolling conditions and the results of the evaluation of corrugating workability and shape change resistance are given in Table 3.

**[Table 3]**

| Test Piece | Steel No. | Cold Rolling Condition | | | Cross-sectional Hardness | Corrugating Workability of Foil | | Shape Change Resistance | | Note |
|---|---|---|---|---|---|---|---|---|---|---|
| | | Thickness in Process Annealing (mm) | Final Foil Thickness (µm) | Final Rolling Reduction (%) | Vickers Hardness after Rolling | (Length after Work/Length before Work) × 100 (%) | Evaluation | Size Change Ratio (%) | Evaluation | |
| AA | 1 | 0.5 | 100 | 80.0 | 270 | 65.5 | ⊙ | 4.5 | ⊙ | Example |
| AB | 1 | 0.5 | 50 | 90.0 | 291 | 70.0 | ⊙ | 3.4 | ⊙ | Example |
| AC | 1 | 0.3 | 100 | 66.7 | 258 | 64.9 | ⊙ | 4.8 | ⊙ | Example |
| AD | 1 | 0.3 | 50 | 83.3 | 290 | 70.1 | ○ | 4.5 | ⊙ | Example |
| AE | 5 | 0.5 | 100 | 80.0 | 285 | 67.8 | ⊙ | 4.1 | ⊙ | Example |
| AF | 5 | 0.5 | 50 | 90.0 | 301 | 72.0 | ○ | 2.9 | ⊙ | Example |
| AG | 5 | 0.3 | 100 | 66.7 | 271 | 66.7 | ⊙ | 3.5 | ⊙ | Example |
| AH | 5 | 0.3 | 50 | 83.3 | 296 | 71.7 | ○ | 3.2 | ⊙ | Example |
| Al | 10 | 0.5 | 100 | 80.0 | 270 | 68.0 | ⊙ | 3.6 | ⊙ | Example |
| AJ | 10 | 0.5 | 50 | 90.0 | 284 | 73.4 | ○ | 3.1 | ⊙ | Example |
| AK | 10 | 0.3 | 100 | 66.7 | 248 | 67.1 | ⊙ | 4.1 | ⊙ | Example |
| AL | 10 | 0.3 | 50 | 83.3 | 271 | 70.4 | ○ | 5.2 | ○ | Example |
| AM | 10 | 0.2 | 180 | 10.0 | 142 | 62.1 | ⊙ | 12.9 | × | Comparative Example |
| AN | 10 | 0.2 | 150 | 25.0 | 166 | 63.1 | ⊙ | 11.4 | × | Comparative Example |
| AO | 10 | 0.2 | 120 | 40.0 | 185 | 63.2 | ⊙ | 11.0 | × | Comparative Example |

Test pieces AA through AL, which had chemical compositions and the hardness after rolling had been performed within the ranges according to the present invention, were excellent in terms of shape change resistance.

On the other hand, test pieces AM and AN, which were comparative examples having Vickers hardness lower than the range according to the present invention after rolling had been performed while having chemical compositions within the range according to the present invention, were poor in terms of shape change resistance.

From the results of the EXAMPLE 1 and the EXAMPLE 2, it is clarified that the foils within the range according to the present invention were excellent in terms of corrugating workability and shape change resistance. In addition, from the EXAMPLE 1 and EXAMPLE 2, it is clarified that the foils within the range according to the present invention are capable of decreasing component costs by decreasing the contents of solute-strengthening chemical elements such as Cu, Nb, Mo, and W and are excellent in terms of manufacturability as a result of decreasing the Al content.

### Industrial Applicability

According to the present invention, it is possible to manufacture a stainless steel foil, which can preferably be used for a catalyst carrier for an exhaust gas purifying facility used for an exhaust gas whose highest temperature is relatively low such as about 800°C or lower by using an ordinary manufacturing line for stainless steel, which has a marked effect on the industry.

## Claims

1. A ferritic stainless steel foil having a chemical composition containing, by mass%, C: 0.020% or less, Si: 0.05% or more and 2.0% or less, Mn: 0.05% or more and 1.0% or less, S: 0.010% or less, P: 0.050% or less, Cr: 10.0% or more and 25.0% or less, Ni: 0.05% or more and 0.50% or less, Ti: 0.14% or more and 0.25% or less, Al: 0.001% or more and 0.10% or less, V: 0.02% or more and 0.10% or less, N: 0.020% or less, and optionally one, two, or all of Mo: 0.01% or more and 0.50% or less, Cu: 0.01% or more and 0.30% or less, and Co: 0.01% or more and 0.20% or less, and further optionally one, two, or more of Nb: 0.01% or more and 0.20% or less, REM: 0.01% or more and 0.20% or less, Zr: 0.01% or more and 0.20% or less, Hf: 0.01% or more and 0.20% or less, Ca: 0.0003% or more and 0.0020% or less, and Mg: 0.0005% or more and 0.0030% or less, and the balance being Fe and inevitable impurities, and a Vickers hardness of higher than 200 and lower than 350, as determined in accordance with JIS Z 2244.

2. Use of the ferritic stainless steel foil according to Claim 1 in a catalyst carrier for an exhaust gas purifying facility used for an exhaust gas whose highest temperature is 800°C or lower.

3. A method for manufacturing the ferritic stainless steel foil according to Claim 1, the method comprising
a process in which heating a steel slab to 1150°C to 1250°C is performed;
a process in which hot rolling is performed on the heated steel slab,
a process in which cold rolling is performed on the hot-rolled steel sheet,
a process in which process annealing is performed on the cold-rolled steel sheet at a temperature of 800°C to 1100°C and a holding time of 5 seconds to 10 minutes, and
a process in which cold rolling is further performed on the annealed steel sheet with a final rolling reduction of 50% or more and 95% or less,
wherein the total number of times cold rolling is performed is at least 2, and
wherein the obtained foil is used for corrugating work without being subjected to annealing.

## Patentansprüche

1. Ferritische rostfreie Stahlfolie, die eine chemische Zusammensetzung hat, die in Masse-% enthält: C: 0,020 % oder weniger, Si: 0,05 % oder mehr und 2,0 % oder weniger, Mn: 0,05 % oder mehr und 1,0 % oder weniger, S: 0,010 % oder weniger, P: 0,050 % oder weniger, Cr: 10,0 % oder mehr und 25,0 % oder weniger, Ni: 0,05 % oder mehr und 0,50 % oder weniger, Ti: 0,14 % oder mehr und 0,25 % oder weniger, Al: 0,001 % oder mehr und 0,10 % oder weniger, V: 0,02 % oder mehr und 0,10 % oder weniger, N: 0,020 % oder weniger, und optional ein, zwei oder alle aus Mo: 0,01 % oder mehr und 0,50 % oder weniger, Cu: 0,01 % oder mehr und 0,30 % oder weniger, und Co: 0,01 % oder mehr und 0,20 % oder weniger, und ferner optional ein, zwei oder mehr aus Nb: 0,01 % oder mehr und 0,20 % oder weniger, REM: 0,01 % oder mehr und 0,20 % oder weniger, Zr: 0,01 % oder mehr und 0,20 % oder weniger, Hf: 0,01 % oder mehr und 0,20 % oder weniger, Ca: 0,0003 % oder mehr und 0,0020 % oder weniger, und Mg: 0,0005 % oder mehr und 0,0030 % oder weniger, und wobei der Rest Fe und unvermeidbare Verunreinigungen sind, und eine Vickers-Härte von mehr als 300 und weniger als 350, wie gemäß JIS Z 2244 bestimmt.

2. Verwendung der ferritischen rostfreien Stahlfolie nach Anspruch 1 in einem Katalysatorträger für eine Abgasreinigungseinrichtung, die für ein Abgas mit einer Maximaltemperatur von 800 °C oder weniger verwendet wird.

3. Verfahren zur Herstellung der ferritischen rostfreien Stahlfolie nach Anspruch 1, wobei das Verfahren umfasst:
einen Prozess, bei dem eine Erwärmung einer Stahlbramme auf 1150 °C bis 1250 °C vorgenommen wird;
einen Prozess, bei dem Warmwalzen an der erwärmten Stahlbramme ausgeführt wird,
einen Prozess, bei dem Kaltwalzen an der warmgewalzten Stahlbramme ausgeführt wird,
einen Prozess, bei dem Prozessglühen an der kaltgewalzten Stahlfolie bei einer Temperatur von 800 °C bis 1100 °C und eine Haltezeit von 5 Sekunden bis 10 Minuten ausgeführt wird, und
einen Prozess, bei dem Kaltwalzen ferner an der geglühten Stahlfolie mit einer endgültige Walzreduzierung von 50 % oder mehr und 95 % oder weniger ausgeführt wird,
wobei die Gesamtzahl der Kaltwalzvorgänge mindestens 2 beträgt, und
wobei die erhaltene Folie für Riffelarbeiten verwendet wird, ohne dem Glühen ausgesetzt zu sein.

## Revendications

1. Feuille d'acier inoxydable ferritique présentant une composition chimique contenant, en % en masse, C : 0,020 % ou moins, Si : 0,05 % ou plus et 2,0 % ou moins, Mn : 0,05 % ou plus et 1,0 % ou moins, S : 0,010 % ou moins, P : 0,050 % ou moins, Cr : 10,0 % ou plus et 25,0 % ou moins, Ni : 0,05 % ou plus et 0,50 % ou moins, Ti : 0,14 % ou plus et 0,25 % ou moins, Al : 0,001 % ou plus et 0,10 % ou moins, V : 0,02 % ou plus et 0,10 % ou moins, N : 0,020 % ou moins, et facultativement un, deux ou la totalité de Mo : 0,01 % ou plus et 0,50 % ou moins, Cu : 0,01 % ou plus et 0,30 % ou moins, et Co : 0,01 % ou plus et 0,20 % ou moins, et en outre facultativement un, deux ou plus parmi Nb : 0,01 % ou plus et 0,20 % ou moins, REM : 0,01 % ou plus et 0,20 % ou moins, Zr : 0,01 % ou plus et 0,20 % ou moins, Hf : 0,01 % ou plus et 0,20 % ou moins, Ca : 0,0003 % ou plus et 0,0020 % ou moins, et Mg : 0,0005 % ou plus et 0,0030 % ou moins, et le reste étant du Fe et des impuretés inévitables, et une dureté Vickers supérieure à 200 et inférieure à 350, comme déterminé selon JIS Z 2244.

2. Utilisation de la feuille d'acier inoxydable ferritique selon la revendication 1 dans un support de catalyseur pour une installation de purification de gaz d'échappement utilisée pour un gaz d'échappement dont la température la plus élevée est de 800°C ou moins.

3. Procédé de fabrication de la feuille d'acier inoxydable ferritique selon la revendication 1, le procédé comprenant
un processus dans lequel un chauffage d'une brame d'acier est effectué entre 1 150°C et 1 250°C ;
un processus dans lequel un laminage à chaud est effectué sur la brame d'acier chauffée,
un processus dans lequel un laminage à froid est effectué sur la feuille d'acier laminée à chaud,
un processus dans lequel un recuit de processus est effectué sur la feuille d'acier laminée à froid à une température de 800°C à 1100°C et un temps de maintien de 5 secondes à 10 minutes, et
un processus dans lequel un laminage à froid est en outre effectué sur la feuille d'acier recuite avec une réduction de laminage finale de 50 % ou plus et de 95 % ou moins,
dans lequel le nombre total de fois qu'un laminage à froid est effectué est d'au moins 2, et
dans lequel la feuille obtenue est utilisée pour un travail d'ondulation sans être soumise à un recuit.
